## Europäisches Patentamt

## European Patent Office

## Office européen des brevets

(19)

(11) Veröffentlichungsnummer: **0 160 109**
**B1**

(12) **EUROPÄISCHE PATENTSCHRIFT**

(45) Veröffentlichungstag der Patentschrift:
**18.01.89**

(51) Int. Cl.⁴: **F 01 K 25/06**, F 26 B 21/08

(21) Anmeldenummer: **84102050.6**

(22) Anmeldetag: **28.02.84**

(54) **Absorptionswärmepumpe.**

(43) Veröffentlichungstag der Anmeldung:
**06.11.85 Patentblatt 85/45**

(45) Bekanntmachung des Hinweises auf die Patenterteilung:
**18.01.89 Patentblatt 89/3**

(84) Benannte Vertragsstaaten:
**AT BE CH DE FR GB IT LI NL SE**

(56) Entgegenhaltungen:
EP-A- 0 010 551
EP-A- 0 065 042
WO-A-81/03695
WO-A-82/00598
WO-A-82/02939
DE-A- 3 140 013
FR-A- 939 336
FR-A- 2 452 956
FR-A- 2 481 362
FR-A- 2 528 956
US-A- 3 783 613
US-A- 4 009 575
US-E- 20 933

BWK BRENNSTOFF-WÄRME-KRAFT, Band 17, Nr. 6,
Juni 1965, Seiten 292-295; H. STIERLIN: "Ein neuer
Wärmekreisprozess mit Carnot-Wirkungsgrad und
"kalter" Turbine"

(73) Patentinhaber: **Sonnleitner, Ingolf, Müller Rundegg
Weg 4, A-5020 Salzburg (AT)**
Patentinhaber: **Sonnleitner, Dietmar, Dr.,
Bayernstrasse 3, A-5020 Salzburg (AT)**

(72) Erfinder: **Sonnleitner, Engelbert, Bayernstrasse 3,
A-5020 Salzburg (AT)**

(74) Vertreter: **Torggler, Paul, Dr. et al, Patentanwälte Dr.
Paul Torggler Dr. Engelbert Hofinger
Wilhelm-Greil-Strasse 16, A-6020 Innsbruck (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Absorptionswärmepumpe, bei der ein unter Wärmeentwicklung wasserabsorbierendes Lösungsmittel, insbesondere eine wässrige Lösung von Metallsalzen, wie Zinkbromid oder -chlorid und Calciumbromid oder -chlorid und Lithiumbromid oder -chlorid, in einem Kreislauf über einen Absorber und einen Regenerator geführt ist, wobei dem Absorber wärmepumpenexterner Wasserdampf als Wärmemittel zugeführt ist und die aus dem Absorber austretende verdünnte Lösung im Regenerator unter Austreibung von Wasser aufkonzentriert und wieder dem Absorber zugeführt wird, und bei der zumindest ein weiterer, auf höherem Temperaturniveau arbeitender Absorber vorgesehen ist, dem jeweils eine zumindest teilweise durch die Abwärme des Absorbers niedrigeren Temperaturniveaus betriebene Einrichtung zur Erzeugung von Wasserdampf aus Wasser zugeordnet ist, welcher Wasserdampf zumindest teilweise jeweils im weiteren Absorber unter Wärmeentwicklung absorbiert wird.

Ein Grossteil der bisher bekannten Absorptionswärmepumpen arbeitet mit einem Wasser-Ammoniak Gemisch, wobei ammoniakhaltiges Wasser als Lösungsmittel und Ammoniak als Wärmemittel dient und sowohl das Lösungsmittel als auch das Wärmemittel in geschlossener wärmepumpeninternen Kreisläufen geführt werden. Diese Absorptionswärmepumpen sind daher auch gewissermassen wärmeseitig genutzte Absorptionskältemaschinen, die jeweils einen als Kühlwärmetauscher wirkenden Verdampfer für das ausgetriebene und kondensierte Wärmemittel aufweisen, wodurch der wesentliche Nachteil entsteht, die auf höheres Temperaturniveau zu «pumpende» Wärme allein durch die Verdampferfläche in Abhängigkeit der Temperaturdifferenz zwischen Wärmequelle und «kalt»-verdampfendem Wärmemittel aufnehmen zu können. Dadurch bleibt die Anwendung dieser bekannten Wärmepumpen relativ unwirtschaftlich, wozu noch kommt, dass das wärmepumpenintern im geschlossenen Kreislauf geführte Wärmemittel eine direkte Nutzung bereits dampfförmiger Wärmequellen einerseits und die wärmepumpenexterne Verwendung des im Regenerator entstehenden Dampfes andererseits ausschliesst.

Bei Trocknungsanlagen (WO81/03695) ist es bereits bekannt, die feuchte Abluft als Wärmemittel zu benutzen, das im Gegensatz zu einem wasserabsorbierenden Lösungsmittel in keinem geschlossenen Kreislauf geführt ist. Bei der bekannten Anlage wird die in der Abluft enthaltene Feuchtigkeit in einem Absorber von einer konzentrierten Lösung absorbiert, wobei Wärme frei wird. Die trockene Luft strömt weiter und die nunmehr verdünnte Lösung wird einem durch einen Gasbrenner betriebenen Austreiber zugeführt, der das Wärmemittel (Wasserdampf) austreibt und damit wieder eine zur Absorption bereite konzentrierte Lösung liefert. Hauptziel dieser Anlage ist es, aus feuchter Luft heissere und vor allem trockene Luft zu erzeugen. Die bei der Absorption frei werdende Wärme wird dabei einfach abgeführt und nicht zur weiteren Temperaturerhöhung der Trockenluft verwendet. Es muss daher durch den Gasbrenner viel Primärenergie zugeführt werden.

Um aus dem Abdampf einer Turbine Nutzwärme möglichst hohen Temperaturniveaus zu gewinnen, ist bereits eine zweistufige Absorptionswärmepumpe bekannt geworden (DE-A 3140 013). Die Kopplung der beiden Stufen erfolgt dabei dadurch, dass ein direkt vom Abdampf betriebener erster Absorber seine Wärme in einer integrierten Absorber-Verdampfereinheit zur Erzeugung von Wasserdampf aus Wasser hergibt und dieser heisse Wasserdampf einem vom Kreislauf des ersten Absorbers völlig getrennten zweiten Absorber höheren Temperaturniveaus mit eigenem Lösungskreislauf zugeführt wird. Die in getrennten Kreisläufen geführten Lösungen des ersten und zweiten Absorbers werden über Drosseln zweier vom Turbinendampf erwärmten Austreibern zugeführt, worin jeweils bei reduziertem Druck und relativ geringer Temperatur die Austreibung des vorher absorbierten Wasserdampfes erfolgt, worauf die konzentrierten Lösungen mittels Druckpumpen wieder den jeweiligen Absorbern zugeführt werden. Nachteilig wirkt sich dabei aus, dass zum Betrieb der Druckpumpen teuere Primärenergie aufgewendet werden muss und die Regeneration (Austreibung) aufgrund der geringeren Entgasungsbreite bei geringerer Temperatur weniger wirtschaftlich ist. Ausserdem erfordern die zwei getrennten Kreisläufe der beiden Stufen einen erhöhten Leistungsaufwand. Auch sind die verwendeten integrierten Absorber-Verdampfer-Einheiten bzw. Absorber-Austreiber-Einheiten relativ aufwendig und teuer in der Herstellung.

Zur Vermeidung dieser Nachteile ist bei einer Absorptionswärmepumpe der eingangs geschilderten Art erfindungsgemäss vorgesehen, dass die Einrichtung(en) zur Erzeugung von Wasserdampf jeweils aus einem gesonderten als Dampfgefäss ausgeführten Lösungskühler besteht (bestehen), durch den heisse verdünnte Lösung aus mindestens einem Absorber oder konzentrierte Lösung aus dem Regenerator geführt ist, wobei unter indirekter Wärmeabgabe an zugeführtes Wasser Wasserdampf entsteht, dass für alle Absorber ein gemeinsamer Regenerator vorgesehen ist, dem die zum Austreiben benötigte Wärme über die aus dem mit höchstem Temperaturniveau arbeitenden Absorber austretende verdünnte Lösung, vorzugsweise nach deren weiterer Aufheizung in einem vorzugsweise als Solarkollektor ausgebildeten Heizkörper, zugeführt ist, und dass der im Regenerator anfallende Regenerationsdampf gegebenenfalls zusammen mit einem Teil des in dem bzw. den Lösungskühler(n) anfallenden Wasserdampf einem externen Dampfverbraucher zugeführt ist. Die gesonderten, als Dampfgefäss ausgebildeten Lösungskühler erfüllen im Prinzip dieselbe Aufgabe wie die integrierte Absorber-Verdampfer-Einheit der bekannten zweistufigen Anlage, nämlich Wasserdampf aus Wasser für die nächsthöhere Absorberstufe bereitzustellen. Der Vorteil der erfindungsgemäss vorgesehenen Lösungskühler besteht einerseits darin, dass sie als solche im Handel erhältlich und damit kostengünstig sind, und andererseits in der Möglichkeit, sie nicht nur mit heisser verdünnter Lösung aus einem Absorber betreiben zu können, sondern auch mit der heissen konzentrierten Lösung aus dem Regenerator, welche ohnehin vor Zufuhr zu den Absorbern abzukühlen ist. (Diese Abkühlung wurde früher mit Wärmetauschern realisiert).

Ein weiteres Merkmal der Erfindung ist der für alle Absorber gemeinsame Regenerator. Im Gegensatz zum Stand der Technik sind also keine getrennten Lösungskreisläufe für die einzelnen Absorberstufen vorgesehen, was den Leistungsaufwand reduziert. Ausserdem ermöglicht der gemeinsame Regenerator die Verwirklichung einer weiteren der Erfindung zugrundliegenden Idee, nämlich die heisse Lösung aus dem Absorber höchsten Temperaturniveaus, vorzugsweise nach weiterer Aufheizung in einem Heizkörper (Solarkollektor) als Wärmezufuhr in den Regenerator zur Austreibung der verdünnten Lösungen aller Absorber zu verwenden. Die nur bei der höchsten im System vorliegenden Temperatur stattfindende Austreibung ist wesentlich wirtschaftlicher als eine Austreibung bei niedrigen Temperaturen. Ausserdem sind keine Primärenergie verbrauchenden Druckpumpen nötig, sondern lediglich im Verbrauch bescheidene Umwälzpumpen.

Konstruktiv lässt sich ein solcher gemeinsamer Regenerator vorteilhafter dadurch verwirklichen, dass im Regenerator eine Heizschlange angeordnet ist, durch die die aus dem Absorber höchsten Temperaturniveaus stammende Lösung unter indirekter Wärmeabgabe strömt, bevor sie selbst in den Regenerator eintritt. Mit der erfindungsgemässen Einrichtung lässt sich vor allem sekundäre Solarenergie in Form von feuchter Luft zur Gewinnung von Nutzwärme hoher Temperatur und letztlich von mechanischer Energie ausnutzen. Primäre Strahlungswärme kann im als Solarkollektor ausgebildeten Heizkörper ausgenutzt werden.

Möglich ist es auch, als Wärmemittel Abluft aus einem Hallenschwimmbad oder dgl. vorzusehen, wobei vorzugsweise der im Regenerator erzeugte Dampf nach seiner Kondensierung dem Badewasser zugemischt wird, oder als Wärmemittel Abluft aus einer Trocknungsanlage vorzusehen, wobei der im Regenerator erzeugte Dampf als Heizmedium der Trockenanlage zugeführt wird.

Bei der erfindungsgemässen Anlage kann weiters natürlich auch Abdampf einer Kraftwerks-, insbesondere Turbinenanlage, als Wärmemittel vorgesehen sein, wobei der im Regenerator erzeugte Dampf gegebenenfalls nach einer Überhitzung als Antriebsdampf in die Anlage eingespeist werden kann, da so ein üblicher Kondensator zum Kondensieren des Abdampfes vermieden wird, indem bei Dampfkraftwerken der grösste und wegen der damit verbundenen Umweltbelastung auch unerwünschteste Wärmeverlust auftritt.

Bei der erfindungsgemässen Absorptionswärmepumpe wird nur das Lösungsmittel im geschlossenen Kreislauf geführt, nicht aber das Wärmemittel (Arbeitsmedium), das sozusagen nach seinem Austreiben aus dem Lösungsmittel das eigentliche Wärmepumpensystem verlässt, was eben auch die Ausnutzung einer externen, bereits dampfförmigen Wärmequelle erlaubt. Der Wärmeübergang erfolgt somit aus der dampfförmigen Wärmequelle bei gleichzeitigem Stoffübergang im Absorber, und zwar auf Grund der Dampfdruckdifferenz zwischen der Absorberflüssigkeit bzw. deren Dampf und dem der Wärmequelle. Da letzterer Druck ein Vielfaches gegenüber dem von Kaltdampf beträgt, kann auch die Temperatur bzw. der Dampfdruck der Absorptionsflüssigkeit ein Vielfaches der Wert bekannter Absorptionswärmepumpen betragen. Dies erlaubt es, z. B. auch die aus Dampfkraftwerken im Abdampf anfallende Verdampfungswärme im Abdampf auf exergetisch nutzbarem Temperaturniveau ohne externe Wärmeabführung zurückzugewinnen.

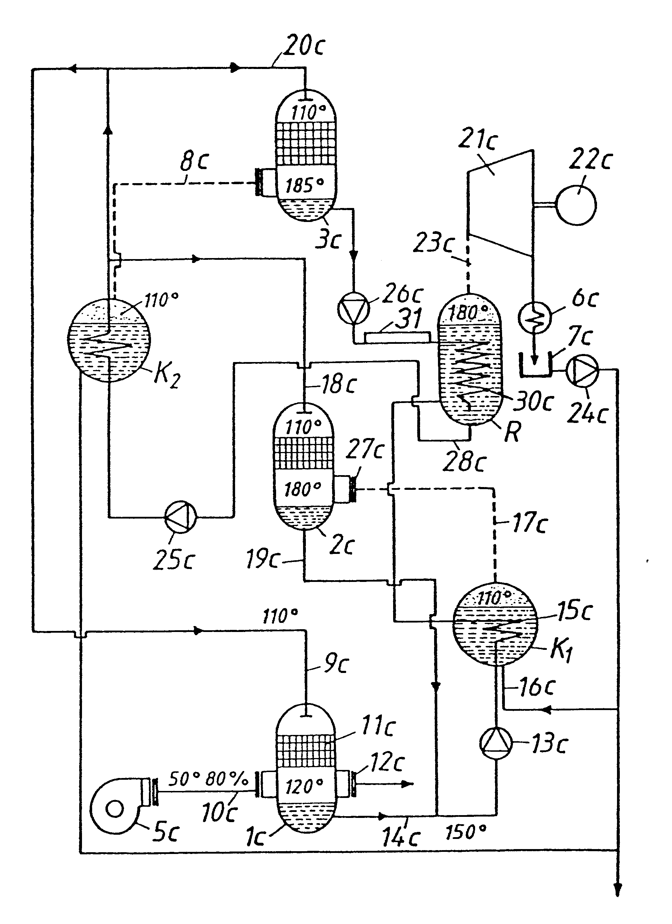

Der Erfindungsgegenstand wird an Hand der Zeichnung noch näher erläutert, in der ein Ausführungsbeispiel der erfindungsgemässen Absorptionswärmepumpe schematisch dargestellt ist.

Die Zeichnung zeigt den besonders zweckmässigen Einsatz einer erfindungsgemässen Absorptionswärmepumpe zur Energie- und Wassergewinnung aus feuchter Umgebungsluft. Ein Ventilator 5c saugt warmfeuchte Umgebungsluft z. B. vom Zustand 50° C/80% relative Luftfeuchtigkeit an und fördert sie durch den Eintrittsstutzen 10c in den Absorber 1c, wo sie nach Kontakt mit der durch die geordneten Packungen 11c verteilten Lösungen von 110° C unter Wärmeentwicklung auf 120° C ihre Feuchtigkeit abgibt. Durch den Austrittsstutzen 12c verlässt die entfeuchtete Luft den Absorber 1c. Die verdünnte Lösung von 120° C wird durch die Umwälzpumpe 13c aus dem Absorber 1c abgesaugt und strömt durch die Leitung 14c zum gesonderten als Dampfgefäss ausgebildeten Lösungskühler K1. Durch die Abgabe der Absorptionswärme wird das durch das Rohr 16c in den Kühler eintretende Wasser verdampft, welcher 110°-ige Dampf durch die Leitung 17c und dem Eintrittstutzen 27c in den zweiten auf höherem Temperaturniveau arbeitenden Absorber 2c strömt, wo er von der aus dem Lösungskühler K2 durch das Rohr 18c kommenden Lösung von 110° C absorbiert wird. Die warme Lösung von 180° gelangt durch das Rohr 19c zurück in die Leitung 14c, doch könte statt dieser Einbindung auch ein Wärmetauscher vorgesehen sein, was allerdings ein zweites Leitungspaar erforderlich machen würde. Da erfindungsgemäss nicht auf eine Kälteleistung in einem Verdampfer Rücksicht zu nehmen ist, hat die möglichst einfache Anlagentechnik den Vorrang vor allfälligen Mischungs- und/oder internen Wärmeverlusten, welche Verluste zwangsläufig dem Gesamtsystem zugutekommen, über die damit in den Lösungskühlern entwickelten Dampfmengen zur Wärmeentwicklung unter Temperaturerhöhung führen. Entscheidend ist dabei, dass alle Lösungsteilmengen im gemeinsamen Regenerator R bei der höchsten im System auftretenden Temperatur (bis zu 180° C) regeneriert, d. h. konzentriert werden und der dabei entstehende Dampf (180° C/1 bar) durch das Rohr 23 c einem externen Dampfturbinengenerator 21c, 22c, zugeteilt werden kann. Nach Kondensation in einem vorzugsweise luftgekühlten 50° C/80%-Kondensator 6c sammelt sich das Wasser im Behälter 7c, wo es mittels der Pumpe 24c zu den Lösungskühlern gefördert, ausgeschieden, einer elektrolytischen Wasserstofferzeugung mittels des aus dem Turbogenerator stammenden Stromes zugeführt oder einer Trinkwasseraufbereitung zugeleitet werden kann. Im Regenerator R fungiert die aus dem Absorber 3c mittels Umwälzpumpe 26c abgesaugte heisse Lösung von 185° C als Heizmedium, das durch Abgabe der Absorptionswärme der Lösung aus dem Absorber 3c über die Heizfläche der Heizschlange 30c im Regenerator R die aus den Absorbern 1c und 2c kommende verdünnte Lösung zum Kochen bringt. Gleichzeitig muss aber auch das Heizmedium, die im Absorber 3c verdünnte heisse Lösung, ausgekocht bzw. regeneriert werden, was durch Zumischung (die Heizschlange 30c ist dazu unten offen) dieser dünnen Lösung zur konzentrierten Lösung im Regenerator R durchgeführt wird. Dieser Vorgang erfolgt nach zunächst indirekter Wärmeabgabe an die kühlere Lösungsmenge, wobei die irreversible Mischungswärme der Antriebsdampferzeugung zugutekommt. Die konzentrierte Lösung gelangt aus dem Regenerator R über die Rohrleitung 28c mittels der Pumpe 25c zur endgültigen Abkühlung auf 110° C in den Lösungskühler K2 und von da zu den Absorbern 1c, 2c, 3c zurück, wobei im Lösungskühler K2 der für den letzten Absorber 3c benötigte Wasserdampf erzeugt wird. Der Nutzanwandungsbereich des Erfindungsgegenstandes wird wesentlich erweitert durch die Verwendung von Dampf aus technisch für den Wärme- und/oder Stoff-Transport benutztem Wasser, z. B. Gas- oder Luftreinigungskreisläufen, Kühltürmen, Kondensatoren, Kraftwerken usw., als Wärmemittel (Arbeitsmedium) für die erfindungsgemässe Wärmepumpe. Hierzu wird das Wasser in eine evakuierte Trennkolonne oder dgl. geleitet, wo Dampf entsteht und gelöste Gase, Luftsauerstoff usw. über die Vakuumpumpe entfernt werden. Der Dampfraum der Trennkolonne steht mit dem Absorptionsraum eines oder mehrerer Absorber 1c in Verbindung, wo der Dampf absorbiert wird und als absorptiv gebildetes Kondensat, in den Wärmepumpenkreislauf eingeht.

Analog gilt die Erweiterung des Anwendungsbereiches auch für natürlich, geothermisch erwärmtes Wasser (Thermalwasser). Zusätzlich zur Nutzung der aus dem Wärmemittel aufgenommenen, latenten Wärme wird die Leistungsfähigkeit der erfindungsgemässen Wärmepumpe erhöht, durch Zuführung bzw. Übertragung sensibler Wärme an den Lösungskreislauf z. B. an die Lösung vor Eintritt in den Regenerator R. Diese Zuführung sensibler Wärme ist generell von Vorteil, insbesondere aber für die grosstechnische Wasserstoffproduktion mittels Elektrolyse, da der sensible Wärmeeinsatz in Verbindung mit der aus dem Wärmemittel gewonnenen, latenten Wärme die Verluste aus dem Energieübertragungsweg Wärmepumpe-Turbinengenerator-Elektrolyseeinrichtung 21c, 22c, 6c, 7c, deckt bzw. überwiegt, womit die grosstechnische Wasserstoffproduktion mittels erfindungsgemässer Nutzung sekundärer Solarenergie in Form natürlicher Luftfeuchte als Wärmemittel und/oder primärer, sensibler Strahlungswärme mittels Kollektor 31, oder sonstigem Heizkörper, wirtschaftlich realisiert werden kann.

In weiterer Ausgestaltung der Erfindung lassen sich unversiegliche Primär-Energiequellen z. B. Wasserkraft für Stromerzeugung (elektrothermische, sensible Wärme), mit unversieglicher Sekundär-Energiequellen z. B. geothermisch erwärmtes Wasser (Thermalwasser) zur grosstechnischen Wasserstoffproduktion nutzen, wodurch Kohlenwasserstoffe als Energieträger ersetzt werden können.

Erfindungsgemässe Beimischung der Halogenide verschiedener Metalle, insbesondere von Calziumbromid und Zinkbromid zum Lithiumthiumhalogenid (Chlorid oder Bromid) bewirkt eine Senkung des Dampfdruckes über der Absorptionslösung und ermöglicht höhere Betriebstemperaturen im Absorber und Regenerator. Diese, gegenüber reinen Lithiumbromid- u./o. Chlorid-Lösungen günstigeren chemisch-physikalischen und thermodynamischen Eigenschaften der vorangeführten Mischungen, vorzugsweise in molaren Verhältnissen, erweitern den Nutzungsbereich der erfindungsgemässen Wärmepumpe hinsichtlich niedrigerer Wärmemitteltemperaturen, als auch höherer Nutzungstemperaturen (Nutzwärmeniveau). Technisch-wirtschaftlich nutzbar ist etwa der Temperaturbereich von 20° C des Wärmemittels (Arbeitsmedium) bis zu ca. 250° C der Nutzwärmetemperatur, entsprechend sattdampf von ca. 40 bar aus einem der Lösungskühler u./o. einem in den Wärmepumpenkreislauf eingebundenen Wasserdampfentwickler wie z. B. mittels Wärmeträgeröl beheiztem Dampfgenerator oder dergleichen.

## Patentansprüche

1. Absorptionswärmepumpe, bei der ein unter Wärmeentwicklung wasserabsorbierendes Lösungsmittel, insbesondere eine wässrige Lösung von Metallsalzen, wie Zinkbromid oder -chlorid und Calziumbromid oder -chlorid und Lithiumbromid oder -chlorid, in einem Kreislauf über einen Absorber (1c) und einen Regenerator (R) geführt ist, wobei dem Absorber (1c) wärmepumpenexterner Wasserdampf als Wärmemittel zugeführt ist und die aus dem Absorber (1c) austretende verdünnte Lösung im Regenerator (R) unter Austreibung von Wasser aufkonzentriert und wieder dem Absorber (1c) zugeführt wird, und bei der zumindest ein weiterer, auf höherem Temperaturniveau arbeitender Absorber (2c, 3c) vorgesehen ist, dem jeweils eine zumindest teilweise durch die Abwärme des Absorbers (1c) niedrigeren Temperaturniveaus betriebene Einrichtung (K1, K2) zur Erzeugung von Wasserdampf aus Wasser zugeordnet ist, welcher Wasserdampf zumindest teilweise jeweils im weiteren Absorber (2c, 3c) unter Wärmeentwicklung absorbiert wird, dadurch gekennzeichnet, dass die Einrichtung(en) zur Erzeugung von Wasserdampf jeweils aus einem gesonderten als Dampfgefäss ausgeführten Lösungskühler (K1, K2) besteht (bestehen), durch den heisse verdünnte Lösung aus mindestens einem Absorber (1c, 2c) oder konzentrierte Lösung aus dem Regenerator (R) geführt ist, wobei unter indirekter Wärmeabgabe an zugeführtes Wasser Wasserdampf entsteht, dass für alle Absorber (1c, 2c, 3c) ein gemeinsamer Regenerator (R) vorgesehen ist, dem die zum Austreiben benötigte Wärme über die aus dem mit höchstem Temperaturniveau arbeitenden Absorber (3c) austretende verdünnte Lösung, vorzugsweise nach deren weiterer Aufheizung in einem vorzugsweise als Solarkollektor (31) ausgebildeten Heizkörper, zugeführt ist, und dass der im Regenerator (R) anfallende Regenerationsdampf gegebenenfalls zusammen mit einem Teil des in dem bzw. den Lösungskühler(n) (K1, K2) anfallenden Wasserdampf einem externen Dampfverbraucher (21c, 22c) zugeführt ist.

2. Wärmepumpe nach Anspruch 1, dadurch gekennzeichnet, dass der Wasserdampf dem ersten Absorber (1c) und gegebenenfalls zum Teil auch dem bzw. den weiteren Absorber(n) (2c, 3c) in Form von feuchter Umgebungsluft zugeführt ist.

3. Wärmepumpe nach Anspruch 1, dadurch gekennzeichnet, dass Quellenwärmeträger in flüssigem Agregatzustand wie natürlichem Thermalwasser, Industrieabwässer und dgl. über ein permanent evakuiertes Entgasungsgefäss geleitet wird, dessen Dampfraum mit einem oder mehreren Absorbern in Verbindung steht.

4. Wärmepumpe nach Anspruch 1, dadurch gekennzeichnet, dass als Wärmemittel der Wasserdampf aus feuchter Trocknungsluft dient.

5. Wärmepumpe nach Anspruch 1, dadurch gekennzeichnet, dass als Wärmemittel der Wasserdampf aus der Abluft von einem Hallenschwimmbad, insbesondere Thermalhallenbad dient.

6. Wärmepumpe nach einem der Ansprüche 1 bis 5, dadurch gekennzeichnet, dass der externe Dampfverbraucher ein Turbinengenerator (21c) ist.

7. Wärmepumpe nach einem der Ansprüche 1 bis 6, dadurch gekennzeichnet, dass das im Dampfverbraucher anfallende Kodensat einer externen Wasserverwendung, beispielsweise einer Trinkwasseraufbereitungsanlage zugeführt ist.

8. Wärmepumpe nach einem der Ansprüche 1 bis 7, dadurch gekennzeichnet, dass das im Dampferzeuger anfallende Kondensat teilweise dem bzw. den als Lösungskühler(n) (K1, K2) ausgebildeten Dampfgefässen zugeführt ist.

9. Wärmepumpe nach einem der Ansprüche 1 bis 8, dadurch gekennzeichnet, dass im Regenerator (R) eine Heizschlange (30c) angeordnet ist, durch die die aus dem Absorber (3c) höchsten Temperaturniveaus stammende Lösung unter indirekter Wärmeabgabe strömt, bevor sie selbst in den Regenerator (R) eintritt.

## Claims

1. An absorption-type heat pump, in which a solvent capable of absorbing water with evolution of heat, in particular an aqueous solution of metal salts such as zinc bromide or zinc chloride and calcium bromide or calcium chloride and lithium bromide or lithium chloride, are passed in a cycle through an absorber (1c) and a regenerator (R), wherein steam acting as heating medium is fed to the absorber (1c) from a source external to the heat pump and wherein the diluted solution leaving the absorber (1c) ist reconcentrated in the regenerator (R) with expulsion of water and is returned to the absorber (1c) and wherein at least one further absorber (2c, 3c) operating at a higher temperature level ist provided with each of which there is associated for generating steam from water a device (K1, K2) operated at least partly by the waste heat of the lower-temperature absorber (1c), said steam being at least partly absorbed with evolution of heat in other absorbers (2c, 3c), characterised in that the device(s) for generating steam each consist of a separate solvent cooler (K1, K2) constructed as a steam pot, through which the hot diluted solution coming from at least one absorber (1c, 2c) or the concentrated solution from the regenerator (R) is passed, wherein under indirect heat transfer to infed water steam is evolved, and wherein for all absorbers (1c, 2c, 3c) a common regenerator (R) ist provided, to which the heat required for the expulsion of water is supplied by means of the diluted solution leaving the absorber (3c) operating at the highest temperature, preferably after further heating of said solution in a heating element constructed preferably as a solar cell (31), and wherein the reclaimed steam from the regenerator (R), optionally together with a portion of the steam reclaimed from the solvent cooler(s) (K1, K2), is fed to an external steam consumer unit (21c, 22c).

2. A heat pump according to Claim 1, characterised in that the water rapour is fed to the first absorber (1c) and, optionally in part also to the second or further absorber(s) (2c, 3c) in the form of moist ambient air.

3. A heat pump according to Claim 1, characterised in that the liquid thermal medium, such as natural thermal spring water, industrial effluent or the like, is passed through a permanently evacuated degassing vessel, the vapour space of which communicates with one or more absorbers.

4. A heat pump according to Claim 1, characterised in that the heating medium ist constituted by water vapour from moist dryer exhaust air.

5. A heat pump according to Claim 1, characterised in that the water vapour drawn from the exhaust air from a swimming pool hall, especially from a thermal bath hall, serves as heating medium.

6. A heat pump according to any one of Claims 1 to 5, characterised in that the external steam consumer unit is a turbine generator (21c).

7. A heat pump according to any one of Claims 1 to 6, characterised in that the condensate obtained in the steam consumer unit is fed to an external water consumption, for example a drinking water plant.

8. A heat pump according to any one of Claims 1 to 7, characterised in that the condensate obtained in the steam generator ist partly fed to the steam pots constructed as solvent cooler(s) (K1, K2).

9. A heat pump according to any one of Claims 1 to 8, characterised in that in the regenerator (R) a heating coil (30c) ist arranged, through which the solution originating in the absorber (3c) operating at the highest temperature level flows with indirect heat transfer before it actually enters the regenerator (R).

**Revendications**

1. Pompe à chaleur à absorption dans laquelle un solvant qui absorbe l'eau en produisant un dégagement de chaleur, en particulier, une solution aqueuse de sels métalliques tels que le bromure ou le chlorure de zinc, le bromure ou le chlorure de calcium et le bromure ou le chlorure de lithium, circule dans un circuit en passant à travers un absorbeur (1c) et un régénérateur (R), cependant que de la vapeur d'eau externe à la pompe à chaleur et jouant le rôle d'agent chauffant est acheminée à l'absorbeur (1c) et que la solution diluée sortant de l'absorbeur (1c) est concentrée dans le régénérateur (R) avec expulsion d'eau, puis est renvoyée à l'absorbeur (1c), et dans laquelle il est prévu au moins un absorbeur additionnel (2c, 3c) qui travaille à un niveau de température plus élevé et auquel est associé un dispositif (K1, K2) de production de vapeur d'eau à partir d'eau, qui est au moins partiellement alimenté par la chaleur perdue de l'absorbeur (1c), présentée à un niveau de température plus bas, cette vapeur d'eau étant absorbée au moins partiellement das l'absorbeur additionnel (2c, 3c) en produisant un dégagement de chaleur, caractérisée en ce que le ou les dispositif(s) de production de vapeur d'eau est ou sont constitué(s) chacun par un refroidisseur de solution séparé (K1, K2) constitué par une capacité de vapeur, et à travers lequel on fait passer une solution diluée très chaude provenant d'au moins un absorbeur (1c, 2c) ou une solution concentrée provenant du régénérateur (R), ce passage s'effectuant avec génération de vapeur d'eau par suite d'une cession indirecte de chaleur à l'eau acheminée, en ce qu'il est prévu un régénérateur (R) commun à tous les absorbeurs (1c, 2c, 3c), auquel la chaleur nécessaire pour l'expulsion est apportée par l'intermédiaire de la solution diluée sortant de l'absorbeur (3c) qui travaille au niveau de température le plus élevé, de préférence après un nouveau chauffage de cette solution dans un corps de chauffe formé de préférence par un collecteur solaire (31) et en ce que la vapeur de régénération qui se forme dans le régénérateur (R) est envoyée à un dispositif extérieur consommateur de vapeur (21c, 22c), éventuellement conjointement avec une partie de la vapeur d'eau qui se forme dans le ou dans les refroidisseur(s) de solution (K1, K2).

2. Pompe à chaleur selon la revendication 1, caractérisée en ce que la vapeur d'eau est acheminée au premier absorbeur (1c) et éventuellement, en partie également à l'absorbeur additionnel ou aux absorbeurs additionnels (2c, 3c), sous la forme d'air ambiant humide.

3. Pompe à chaleur selon la revendication 1, caractérisée en ce qu'on fait passer un fluide caloporteur source à l'état d'agrégat liquide tel qu'une eau thermale naturelle, des eaux résiduaires industrielles ou équivalents, à travers une capacité de dégazage mise sous vide en permanence, dont la chambre de vapeur est en communication avec un ou plusieurs absorbeur(s).

4. Pompe à chaleur selon la revendication 1, caractérisée en ce que de la vapeur d'eau extraite de l'air humide sortant d'un processus de séchage sert d'agent chauffant.

5. Pompe à chaleur selon la revendication 1, caractérisée en ce que de la vapeur d'eau extraite de l'air s'échappant d'une piscine couverte, en particulier d'une piscine couverte thermale sert d'agent chauffant.

6. Pompe à chaleur selon l'une des revendications 1 à 5, caractérisée en ce que le dispositif extérieur consommateur de vapeur est une génératrice à turbine (21c).

7. Pompe à chaleur selon l'une des revendications 1à 6, caractérisée en ce que le condensat qui se forme dans le dispositif consommateur de vapeur est envoyé à une unité extérieure d'utilisation d'eau, par exemple, à une installation de préparation d'eau potable.

8. Pompe à chaleur selon l'une des revendications 1 à 7, caractérisée en ce que le condensat qui se forme dans le générateur de vapeur est envoyé en partie à la ou aux capacités de vapeur constituant le ou les refroidisseur(s) de solution (K1, K2).

9. Pompe à chaleur selon l'une des revendications 1 à 8, caractérisée en ce que, dans le régénérateur (R), est disposé un serpentin de chauffage (30c) dans lequel la solution provenant de l'absorbeur (3c) qui travaille au niveau de température le plus élevé circule, avec cession indirecte de chaleur, avant de pénétrer dans le régénérateur (R).